# DEMANDE DE BREVET EUROPEEN

(11) **EP 1 036 979 A1**
(43) Date de publication de la demande: **20.09.2000**
(21) Numéro de dépôt: 00200802.7
(22) Date de dépôt: 07.03.2000
(51) Int. Cl.: F21V 8/00

(54) **Source de lumière, comprenant une pluralité de guides de lumière assemblés pour former une surface**

(30) Priorité: 16.03.1999 FR 9903221
(71) Demandeur: Koninklijke Philips Electronics N.V., 5621 BA Eindhoven (NL)
(72) Inventeur: Montagne, Louis, Société Civile S.P.I.D., 75008 Paris (FR)
(74) Mandataire: Chaffraix, Jean

(57) **Abrégé**

La source de lumière comprend une pluralité de fibres optiques (2) à diffusion latérale, assemblées parallèlement l'une à l'autre pour former une surface. Des réflecteurs longilignes à section concave (1) circulaire ou parabolique, assemblés parallèlement l'un à l'autre, forment une surface réfléchissante, chacun des réflecteurs longilignes étant placé derrière une fibre (2) avec sa face concave tournée vers la fibre. Une pluralité de lentilles cylindriques (3), également assemblées parallèlement pour former une surface, est disposée de telle façon que chacune des lentilles cylindriques soit placée devant une fibre (2).

Applications : éclairage

## Description

La présente invention concerne un élément émetteur de lumière comprenant une pluralité de guides de lumière à diffusion latérale, assemblés parallèlement entre eux pour former une surface lumineuse, comportant une face dite avant et une face dite arrière, muni d'une surface réfléchissante pour faire sortir la lumière par la face avant.

Un élément émetteur de lumière selon le préambule ci-dessus est connu du document Patent Abstract of Japan n°07301712 A. Selon ce document, l'élément émetteur de lumière est obtenu en disposant plusieurs guides de lumière parallèlement entre eux, en les enfermant entre deux couches de résine transparente pour constituer un ruban, l'une des faces de ce ruban étant recouverte d'une matière réfléchissante.

Un objet de l'invention est d'améliorer les performances d'un tel ruban.

A cet effet, il comprend des éléments optiques assemblés parallèlement entre eux pour former une surface optique intégrée à l'élément émetteur de lumière, chacun des éléments optiques étant disposé en correspondance avec un des guides de lumière.

Des modes particuliers de réalisation de l'invention apparaissent dans les revendications dépendantes 2 à 11.

Ces aspects de l'invention ainsi que d'autres aspects plus détaillés apparaîtront plus clairement grâce à la description suivante d'un mode de réalisation constituant un exemple non limitatif.
La figure 1 représente en perspective une partie d'un élément émetteur de lumière, pour en illustrer l'architecture, dans un premier mode de réalisation.
La figure 2 représente en perspective une partie correspondante d'un élément émetteur de lumière, dans un deuxième mode de réalisation.
La figure 3 représente schématiquement en coupe trois manières d'assembler une fibre sur un réflecteur.
La figure 4 représente en perspective une partie correspondante d'un élément émetteur de lumière, dans un troisième mode de réalisation.

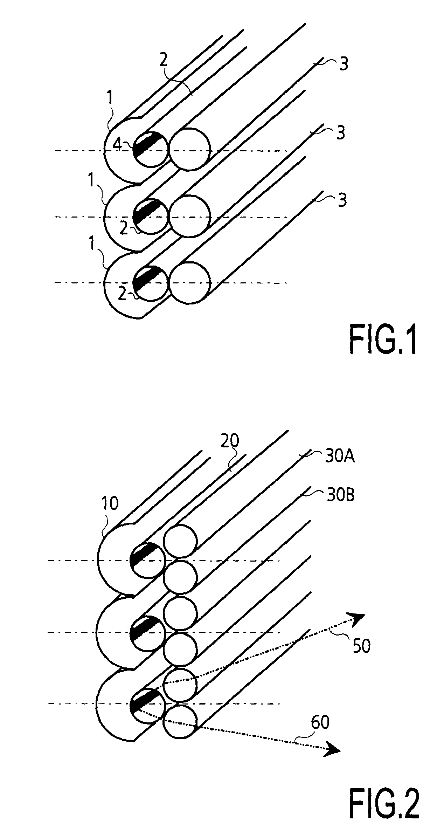

La partie d'élément émetteur de lumière de la figure 1 comprend ici trois guides de lumière 2 constitués chacun par une fibre optique, à une extrémité de laquelle de la lumière peut être introduite, et qui sont assemblées parallèlement entre eux. Il est clair que, en pratique, un nombre de fibres optiques beaucoup plus grand est utilisé, de façon à former quasiment une surface ; le document cité plus haut illustre comment une surface est ainsi obtenue. Les fibres 2 sont assemblées ici dans un même plan vertical. La surface formée comprend une face dite face avant, ici vers la droite, et une face dite face arrière, ici vers la gauche.

Une surface réfléchissante 1 a pour effet de faire sortir la lumière exclusivement par la face avant. Cette surface, constituant un élément optique intégré à l'élément émetteur de lumière, est faite d'une pluralité de réflecteurs longilignes 1, qui ont une section concave, par exemple une section demi circulaire ou une section parabolique, et sont assemblés parallèlement entre eux pour former une surface. Chacun des réflecteurs longilignes est disposé en face d'une fibre optique avec sa face concave tournée vers la fibre.

L'élément émetteur de lumière peut comprendre en outre un autre type d'élément optique intégré à l'élément émetteur de lumière, à savoir une pluralité de lentilles cylindriques 3 également assemblées parallèlement entre elles pour former une surface, chacune des lentilles cylindriques étant disposée devant une fibre optique 2, du côté de sortie de la lumière.

Chaque lentille cylindrique 3 a par exemple une section circulaire, elle est placée en contact avec la fibre optique correspondante.

Chaque fibre optique est munie d'une ligne de micro gravures 4, du côté de sa face arrière, pour diffuser de la lumière, à la fois vers l'arrière vers un réflecteur 1 et, au travers de la fibre 2, vers l'avant. La ligne de micro gravures est placée sensiblement au foyer optique du réflecteur correspondant.

Les micro gravures 4 peuvent être réalisées par déformation, à froid ou à chaud, par abrasion, par découpe au moyen d'un outil, notamment un outil en acier recouvert de polytétrafluoréthylène, ou encore par gravure laser. Ces micro gravures peuvent avoir une section quelconque, par exemple en forme de triangle, ou d'arc de cercle. Elles pénètrent de quelques dizaines de microns dans la fibre.

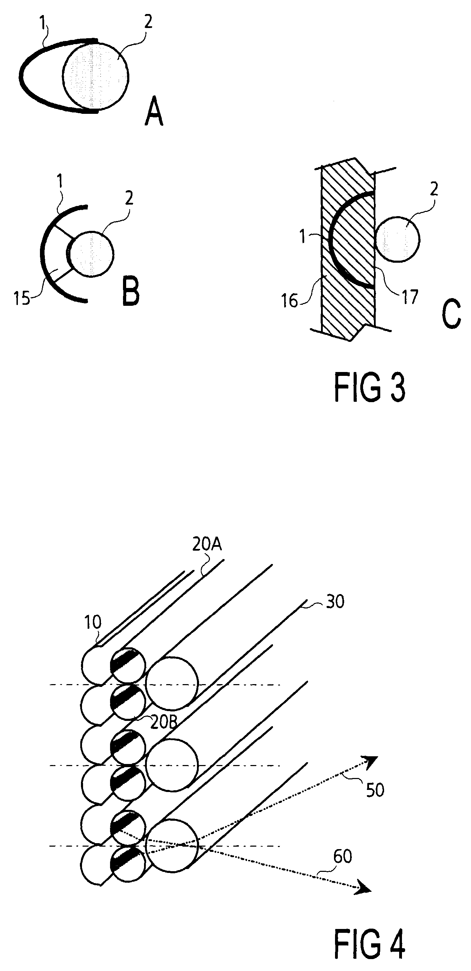

Sur la figure 4, en A, est représentée une première manière d'assembler une fibre sur un réflecteur. Le réflecteur 1 a une section parabolique et vient pincer la fibre 2 entre ses joues. Les joues pourraient présenter des reliefs propres à maintenir la fibre en position. En B, le réflecteur 1 porte, à intervalles réguliers, des supports 15 en relief sur lesquels une fibre peut être collée. En C, les réflecteurs 1 sont moulés ensemble dans une matière d'indice de réfraction plus faible que celui des fibres et des lentilles, au moins dans sa partie 17, pour constituer une nappe 16-17 enrobant les réflecteurs, nappe sur laquelle sont collées les fibres (2). La nappe peut être réalisée en deux temps : dans un premier temps elle comporte seulement la partie 16, puis elle est recouverte localement de la couche réfléchissante 1, et la partie 17 est alors ajoutée. La partie 16 peut être faite d'une matière opaque. La matière de la nappe peut en outre être élastique.

Les réflecteurs peuvent aussi être obtenus par emboutissage d'un profilé, par exemple en aluminium. Alors des bossages 15 peuvent être obtenus par l'emboutissage. Eventuellement le profilé peut aussi être rempli de la matière 17 comme représenté sur la figure 3 C.

Les fibres 2 peuvent être collées l'une à l'autre, ou enrobées dans une nappe de matière plastique, de façon à constituer une deuxième nappe. Les lentilles 3 peuvent enfin être collées l'une à l'autre, ou enrobées dans une nappe de matière plastique d'indice de réfraction plus faible que celui des lentilles, de façon à constituer une troisième nappe. Puis les trois nappes sont collées l'une sur l'autre.

L'ensemble des réflecteurs, des guides de lumière, et des lentilles, peut encore être réalisé en une seule opération, avec la disposition relative définitive, par extrusion ; néanmoins, dans ce cas, il ne serait pas facile de réaliser les micro gravures.

Un tel élément émetteur de lumière peut aussi comprendre seulement les réflecteurs et les fibres optiques, ou bien seulement les fibres optiques et les lentilles. Chaque lentille peut aussi être réalisée au moyen d'une fibre optique, à l'extrémité de laquelle on n'introduit pas de lumière.

Dans la partie d'élément émetteur de lumière de la figure 2, des lentilles cylindriques 30 sont assemblées parallèlement entre elles pour former une surface, et le pas d'assemblage des lentilles 30 est une fraction 1/N du pas d'assemblage des fibres optiques 20 ; ici N=2 ; chacune des fibres optiques 20 est disposée derrière une pluralité de N lentilles, ici deux lentilles 30A, 30B. Ceci procure deux directions d'éclairage différentes, symbolisées par les flèches 50 et 60. Il est clair que des assemblages avec plus de deux lentilles par fibre peuvent aussi être réalisés. Chaque lentille 30A peut en outre avoir une couleur différente de celle d'une lentille 30B.

Dans la partie d'élément émetteur de lumière de la figure 3, des fibres optiques 20 sont assemblées parallèlement entre elles pour former une surface, et le pas d'assemblage des fibres optiques 20 est une fraction 1/N du pas d'assemblage des lentilles cylindriques 30 ; ici N=2 ; chacun des groupes de N fibres optiques, ici deux fibres optiques 20A, 20B, est disposé derrière une lentille 30. Ceci procure deux directions d'éclairage différentes, symbolisées par les flèches 50 et 60. Il est clair que des assemblages avec plus de deux fibres par lentille peuvent aussi être réalisés. Chaque fibre 20A peut en outre avoir une couleur différente de celle d'une fibre 20B.

Il doit être clair que le verbe "comprendre" n'exclut pas la présence d'autres éléments ou étapes que celles listées dans une revendication.

## Revendications

1. Élément émetteur de lumière comprenant une pluralité de guides de lumière à diffusion latérale, assemblés parallèlement entre eux pour former une surface lumineuse, comportant une face dite avant et une face dite arrière, muni d'une surface réfléchissante pour faire sortir la lumière par la face avant, caractérisé en ce qu'il comprend des éléments optiques assemblés parallèlement entre eux pour former une surface optique intégrée à l'élément émetteur de lumière, chacun des éléments optiques étant disposé en correspondance avec un des guides de lumière.

2. Élément émetteur de lumière selon la revendication 1, caractérisé en ce qu'un élément optique intégré est un réflecteur longiligne à section concave, chacun des guides de lumière étant disposé en face d'un réflecteur longiligne dont la face concave est tournée vers le guide.

3. Élément émetteur de lumière selon la revendication 2, caractérisé en ce que chaque guide de lumière est muni d'une ligne de micro gravures pour diffuser de la lumière.

4. Élément émetteur de lumière selon la revendication 3, caractérisé en ce que la ligne de micro gravures d'un guide de lumière est placée sensiblement au foyer optique du réflecteur longiligne correspondant.

5. Élément émetteur de lumière selon la revendication 1, caractérisé en ce qu'un élément optique intégré est une lentille cylindrique disposée en correspondance avec un guide de lumière.

6. Élément émetteur de lumière selon la revendication 5, caractérisé en ce que chacune des lentilles cylindriques est disposée en vis-à-vis d'un guide de lumière.

7. Élément émetteur de lumière selon la revendication 6, caractérisé en ce qu'une lentille cylindrique est placée en contact avec le guide de lumière correspondant.

8. Élément émetteur de lumière selon la revendication 5, caractérisé en ce qu'une lentille cylindrique a une section circulaire.

9. Elément émetteur de lumière selon la revendication 5, caractérisé en ce que chaque guide de lumière est muni d'une ligne de micro gravures pour diffuser de la lumière.

10. Élément émetteur de lumière selon la revendication 5, caractérisé en ce que, dans une surface optique faite d'une pluralité de lentilles cylindriques assemblées parallèlement entre elles pour former une surface, le pas d'assemblage des lentilles est une fraction 1/N du pas d'assemblage des guides de lumière, et chacun des guides de lumière est disposé en vis-à-vis d'une pluralité de N lentilles cylindriques.

11. Élément émetteur de lumière selon la revendication 5, caractérisé en ce que, dans la surface optique faite d'une pluralité de lentilles cylindriques assemblées parallèlement entre elles pour former une surface, le pas d'assemblage des lentilles est N fois le pas d'assemblage des guides de lumière, et chacune des lentilles cylindriques est disposée en vis-à-vis d'une pluralité de N guides de lumière.
